# FASCICULE DE BREVET EUROPEEN

(11) **EP 2 609 309 B1**
(45) Date de publication et mention de la délivrance du brevet: **13.05.2015**
(21) Numéro de dépôt: 11755374.3
(22) Date de dépôt: 11.08.2011
(51) Int. Cl.: F02B 43/10, F02B 51/00, C25B 1/04, F01K 15/02, F01P 3/22, F02M 25/12

(54) **DISPOSITIF D'ALIMENTATION D'UNE MACHINE THERMIQUE À COMBUSTION EN GAZ ENRICHI EN DIHYDROGÈNE ET DIOXYGÈNE**
VORRICHTUNG ZUR VERSORGUNG EINER VERBRENNUNGSKRAFTMASCHINE MIT GAS, DAS MIT DIATOMISCHEM WASSERSTOFF UND DIATOMISCHEM SAUERSTOFF ANGEREICHERT IST
DEVICE FOR SUPPLYING A COMBUSTION HEAT ENGINE WITH GAS ENRICHED WITH DIATOMIC HYDROGEN AND DIATOMIC OXYGEN

(30) Priorité: 26.08.2010 FR 1003455
(43) Date de publication de la demande: 03.07.2013
(73) Titulaire: Conservatoire National des Arts et Métiers, 75003 Paris (FR); Universitatea Politehnica Bucuresti, 060042 Bucuresti (RO)
(72) Inventeur: CHIRIAC, Radu, R-041202 Bucharest (RO); DESCOMBES, Georges, F-91800 Brunoy (FR); PODEVIN, Pierre, F-78000 Versailles (FR)
(74) Mandataire: Chauvin, Vincent
(86) Numéro de dépôt international: PCT/FR2011/000465
(87) Numéro de publication internationale: WO 2012/025672

(56) Documents cités:
- WO-A1-00/53918
- WO-A2-2007/070692
- DE-A1- 2 808 973
- GB-A- 2 447 256
- US-A1- 2006 090 712

## Description

### DOMAINE TECHNIQUE AUQUEL SE RAPPORTE L'INVENTION

La présente invention concerne de manière générale les machines thermique à combustion.

Elle concerne plus particulièrement un dispositif d'alimentation en gaz d'une machine thermique à combustion réalisé par le couplage d'un moyen technique de récupération d'énergie des gaz d'échappement et un dispositif produisant des gaz enrichis en dihydrogène comme décrit dans GB 2 447 256 A.

Cette invention trouve une application particulièrement avantageuse dans la réalisation de moteurs à combustion interne stationnaires, alimentés par différents carburants. Cette application peut être étendue à des moteurs à combustion interne utilisés dans des moyens de propulsion terrestre et maritime.

### ARRIÈRE-PLAN TECHNOLOGIQUE

On connaît de nombreux dispositifs et de nombreuses méthodes pour réduire la consommation en hydrocarbures et les émissions de molécules polluantes des machines thermiques à combustion, en particulier des moteurs à combustion interne, notamment dans le domaine des véhicules automobiles.

Les dispositifs et méthodes connus pour réduire la consommation en hydrocarbures présentent cependant l'inconvénient de n'offrir qu'un rendement énergétique faible qui limite fortement la réduction de consommation des hydrocarbures.

Les dispositifs et méthodes connus pour réduire les émissions de molécules polluantes comme le monoxyde de carbone, les hydrocarbures imbrûlés et les oxydes d'azote font habituellement intervenir de multiples dispositifs de traitement disposés sur le trajet de la ligne d'échappement du moteur. Ces dispositifs de traitement des gaz d'échappement permettent d'éliminer une partie des molécules polluantes émises dans les gaz d'échappement, mais présentent une efficacité limitée.

### OBJET DE L'INVENTION

Un but de la présente invention est de fournir un dispositif permettant à la fois de réduire la consommation en carburant d'une machine thermique à combustion et de limiter les émissions de molécules polluantes dans les gaz d'échappement, tout en améliorant son rendement énergétique.

A cet effet, on propose selon l'invention un dispositif d'alimentation d'une machine thermique à combustion en gaz comportant un dispositif d'électrolyse de l'eau alimenté en eau par un circuit d'alimentation en eau et produisant en sortie un gaz enrichi en dihydrogène et en dioxygène destiné à être introduit dans ladite machine, ledit dispositif d'électrolyse comportant au moins deux électrodes connectées à un générateur électrique qui appartient à un convertisseur électromécanique adapté à convertir en énergie électrique l'énergie d'un flux de vapeur d'eau circulant dans le circuit d'alimentation en eau.

Ainsi, grâce au dispositif selon l'invention, une partie de l'énergie thermique des gaz d'échappement, qui est habituellement dissipée dans l'environnement de la machine, est convertie en énergie électrique de manière à alimenter en électricité le dispositif d'électrolyse. Celui-ci ne nécessite donc pas une alimentation électrique autonome, indépendante de la machine ou chargée par un circuit électrique de celle-ci.

Le rendement énergétique de la machine thermique comportant le dispositif selon l'invention est ainsi amélioré.

Une alimentation électrique indépendante présenterait l'inconvénient de devoir être rechargée périodiquement et une alimentation électrique chargée par la machine thermique occasionnerait une consommation additionnelle de carburant qui limiterait fortement la réduction de la consommation obtenue par ailleurs par l'apport de dihydrogène à la machine.

Le dispositif selon l'invention permet ainsi, d'une part, un apport de dihydrogène jouant le rôle de carburant dans la réaction de combustion ayant lieu dans la chambre de combustion et un apport de dioxygène jouant le rôle de comburant.

L'apport de dihydrogène permet ainsi de réduire la consommation de carburant de type hydrocarbure dans la chambre de combustion et l'apport de dioxygène permet d'améliorer la réaction de combustion, dans le sens où celle-ci est plus complète. La quantité de molécules polluantes habituellement produites du fait d'une réaction de combustion incomplète dans la chambre de combustion, comme par exemple le monoxyde de carbone ou les hydrocarbures imbrulés, est ainsi diminuée.

Selon d'autres caractéristiques avantageuses et non limitatives du dispositif selon l'invention,
- ledit circuit d'alimentation en eau comporte un réservoir d'eau liquide relié en aval à un conduit d'acheminement de l'eau sur le trajet duquel est placé un dispositif de récupération de l'énergie des gaz d'échappement adapté à faire passer l'eau liquide le traversant sous forme vapeur sous l'action de la chaleur des gaz d'échappement de la machine ;
- ledit convertisseur électromécanique est disposé en aval du dispositif de récupération d'énergie sur le trajet du circuit d'alimentation en eau et comporte un dispositif de détente de la vapeur d'eau circulant dans ce circuit d'alimentation en eau qui est couplé au générateur électrique de telle sorte que la détente de la vapeur d'eau dans le dispositif de détente entraîne la génération d'une tension électrique aux bornes du générateur électrique ;
- ledit dispositif d'électrolyse est disposé en aval du dispositif de détente sur le trajet du circuit d'alimentation en eau, de manière à être alimenté en vapeur de l'eau par ce circuit d'alimentation, et débouche en aval sur un conduit de récupération d'eau du circuit d'alimentation en eau ;
- un condenseur est disposé sur le trajet dudit conduit de récupération d'eau, en aval du dispositif d'électrolyse, ledit conduit de récupération de l'eau débouchant en aval dans le réservoir d'eau ;
- une pompe de relevage est disposée sur le trajet dudit conduit de récupération de l'eau, entre le condenseur et le réservoir d'eau ;
- un dispositif de refroidissement disposé sur le trajet du circuit l'alimentation en eau, en aval du dispositif de détente, est adapté à faire passer la vapeur d'eau le traversant sous forme liquide, ledit dispositif d'électrolyse étant disposé en aval de ce dispositif de refroidissement de manière à être alimenté en eau liquide par le circuit d'alimentation d'eau et débouchant en aval sur un conduit de récupération de l'eau ;
- une pompe est disposée sur le trajet dudit conduit de récupération de l'eau, entre le dispositif d'électrolyse et le réservoir d'eau ;
- un échangeur de chaleur est disposé sur le trajet du circuit d'alimentation en eau, entre le réservoir d'eau et le dispositif de récupération d'énergie ;
- lesdites électrodes du dispositif d'électrolyse sont connectées à une batterie connectée aux bornes du générateur électrique ;
- il est prévu un dispositif d'injection d'au moins une partie du gaz enrichi en dihydrogène et en dioxygène dans une ligne d'admission de la machine ou dans une chambre de combustion de cette machine thermique ;
- il est prévu un conduit de dérivation du dioxygène produit par le dispositif d'électrolyse adapté à recueillir au moins une partie du dioxygène produit par ce dispositif et à l'acheminer vers une ligne d'échappement de la machine thermique.

En variante, une partie ou la totalité du dioxygène produit par le dispositif d'électrolyse est prélevée par ce conduit de dérivation qui achemine ce dioxygène et le réintroduit dans la ligne d'échappement, en amont des dispositifs de traitement des gaz d'échappement.

Le passage d'une partie du dioxygène produit par le dispositif d'électrolyse dans ce conduit de dérivation permet de faire varier le rapport entre les quantités de dihydrogène et de dioxygène introduites en amont de la chambre de combustion de la machine.

Cela permet en outre de réduire les risques d'explosion du mélange de dioxygène et de dihydrogène et d'améliorer les performances de dépollution du système de traitement des gaz d'échappement.

L'invention concerne également une machine thermique à combustion, comportant au moins une chambre de combustion alimentée en gaz d'admission par une ligne d'admission et débouchant en aval dans une ligne d'échappement dans laquelle circulent les gaz d'échappement, comportant un dispositif d'alimentation en gaz tel que décrit précédemment, adapté à injecter dans ladite ligne d'admission ou dans ladite chambre de combustion au moins une partie du gaz enrichi en dihydrogène et en dioxygène produit par ce dispositif.

Avantageusement, un échangeur de chaleur est disposé sur le trajet du circuit d'alimentation en eau, entre un réservoir d'eau et un dispositif de récupération d'énergie, ledit échangeur de chaleur étant un échangeur air-eau adapté à favoriser les échanges de chaleur entre le gaz circulant dans la ligne d'admission de la machine et l'eau circulant dans le circuit d'alimentation en eau du dispositif d'alimentation en gaz.

L'invention concerne enfin un procédé pour alimenter une machine thermique à combustion, comportant les étapes suivantes :
- faire circuler de l'eau liquide dans un circuit d'alimentation en eau d'un dispositif d'électrolyse de l'eau,
- en amont du dispositif d'électrolyse, faire passer l'eau circulant dans le circuit d'alimentation en eau en phase vapeur,
- faire circuler l'eau en phase vapeur dans un convertisseur électromécanique adapté à convertir en énergie électrique l'énergie du flux de vapeur d'eau,
- utiliser l'énergie électrique générée par le convertisseur électromécanique pour imposer une tension entre au moins deux électrodes du dispositif d'électrolyse de l'eau,
- injecter dans une ligne d'admission ou dans une chambre de combustion de la machine au moins une partie du gaz enrichi en dihydrogène et dioxygène produit par l'électrolyse de l'eau.

L'invention concerne enfin un moteur à combustion interne comportant une machine thermique à combustion telle que décrite précédemment.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés,
- la figure 1 est une vue schématique d'un moteur à combustion interne comportant un dispositif d'alimentation en gaz conforme à un premier mode de réalisation de l'invention ; et,
- la figure 2 est une vue schématique d'un moteur à combustion interne comportant un dispositif d'alimentation en gaz conforme à un deuxième mode de réalisation de l'invention.

En préliminaire, on notera que les éléments identiques ou similaires dans les différents modes de réalisation de l'invention, représentés sur les différentes figures, seront dans la mesure du possible référencés par les mêmes signes de référence et ne seront pas décrits à chaque fois.

L'exemple de réalisation décrit plus en détail ici concerne plus particulièrement une machine thermique à combustion du type moteur à combustion interne.

Cependant, la description qui suit pourrait s'appliquer à d'autres types de machines thermiques à combustion, comme les fours ou les chaudières par exemple.

Dans la description, les termes « amont » et « aval » seront utilisés suivant le sens de l'écoulement des gaz dans le moteur.

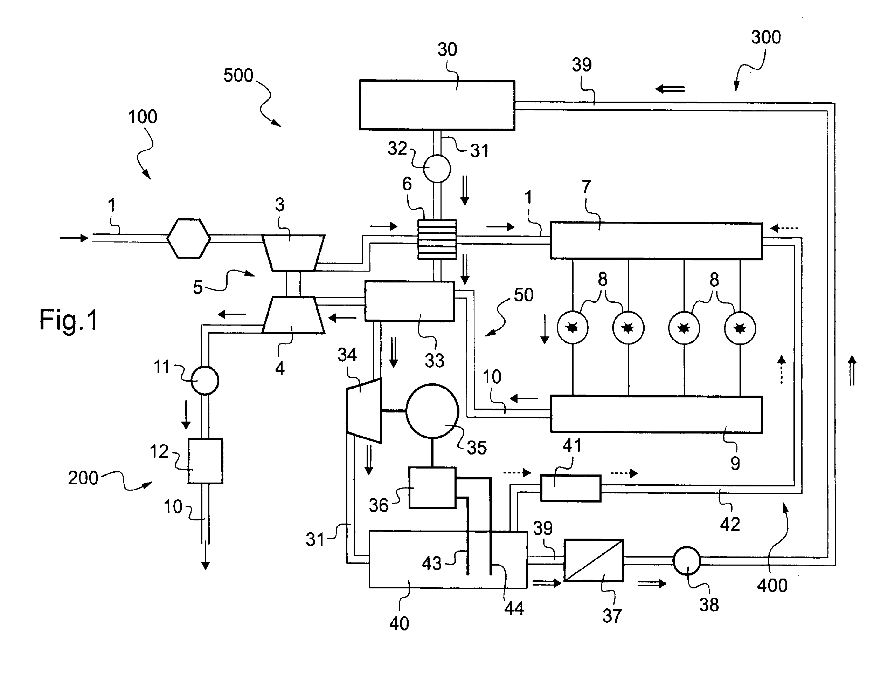

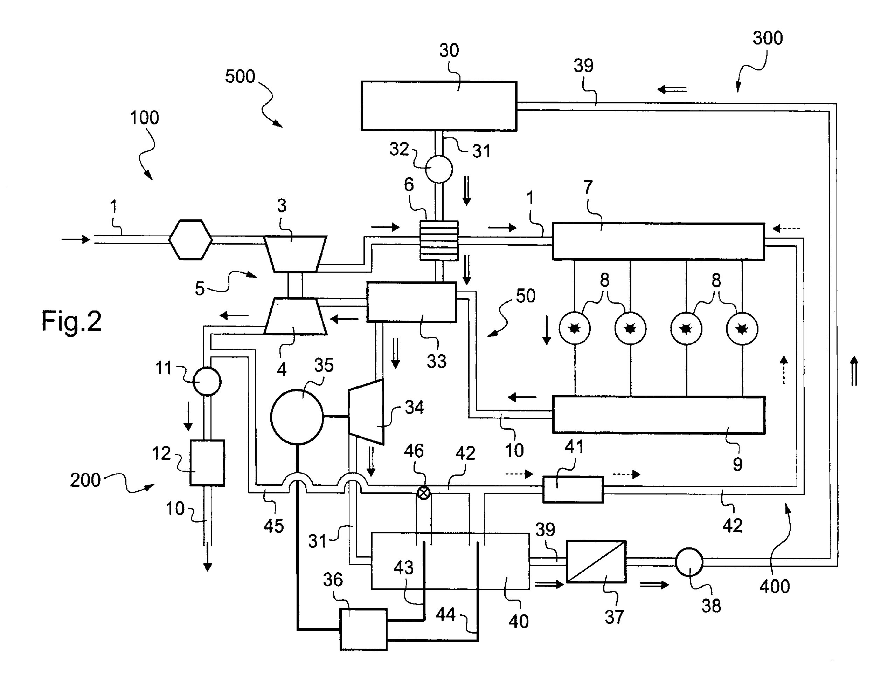

On a représenté sur les figures 1 et 2 un moteur à combustion interne comportant quatre chambres de combustion 8 alimentées en air frais par une ligne d'admission 100 et débouchant en aval sur une ligne d'échappement 200.

La ligne d'admission 100 comporte un conduit d'admission 1 dans lequel circule de l'air frais.

Le moteur est suralimenté par un turbocompresseur 5 comportant une turbine entraînante 4 et une turbine entraînée 3 appelée compresseur 3.

La turbine entraînante 4 de ce turbocompresseur 5 est placée dans un conduit d'échappement 10 et entraîne le compresseur 3 placé dans le conduit d'admission 1 afin de comprimer l'air frais y circulant.

Le conduit d'admission 1 débouche dans un répartiteur 7.

Le répartiteur 7 est relié à une soupape d'admission de chaque cylindre du moteur. Les gaz comprimés par le compresseur 3 entrent via chaque soupape d'admission dans la chambre de combustion 8 correspondante. Il est prévu des injecteurs (non représentés) qui injectent du carburant dans chaque chambre de combustion 8.

Après la combustion, les gaz d'échappement résiduels sont expulsés hors de la chambre de combustion 8 à travers une soupape d'échappement vers un collecteur 9 de gaz d'échappement.

Ils circulent ensuite dans le conduit d'échappement 10, à travers la turbine entraînante 4 du turbocompresseur 5 et des systèmes de traitement des gaz d'échappement 11, 12, avant d'être libérés dans l'atmosphère.

Les systèmes de traitement des gaz d'échappement 11, 12 comportent par exemple un catalyseur 11 et un filtre à particules 12.

Le moteur comporte avantageusement une unité de commande électronique (non représentée) qui commande par exemple la quantité de carburant injecté par l'injecteur dans la chambre de combustion ainsi que le moment où est réalisée cette injection. Cette unité de commande électronique reçoit également des informations provenant de différents capteurs du moteur.

Le moteur comporte également un dispositif 500 d'alimentation en gaz enrichi en dihydrogène et en dioxygène.

Ce dispositif 500 comporte un dispositif d'électrolyse de l'eau 40 alimenté en eau par un circuit d'alimentation en eau 300 et produisant en sortie le gaz enrichi en dihydrogène et en dioxygène introduit dans le moteur.

Ce gaz enrichi en dihydrogène et en dioxygène est obtenu par la réaction d'électrolyse de l'eau selon laquelle deux molécules d'eau donnent deux molécules de dihydrogène et une molécule de dioxygène.

Le dispositif d'électrolyse 40 comporte au moins deux électrodes 43, 44 connectées à un générateur électrique 35 et mises en contact avec l'eau circulant dans le circuit d'alimentation en eau 300.

Le circuit d'alimentation en eau 300 du dispositif d'électrolyse 40 comporte un réservoir d'eau 30. Ce réservoir d'eau 30 est rempli périodiquement d'eau par l'utilisateur au fur et à mesure que l'eau présente dans le réservoir d'eau 30 est consommée par la réaction d'électrolyse de l'eau ayant lieu dans le dispositif d'électrolyse 40.

Le réservoir d'eau 30 débouche en aval dans un conduit d'acheminement de l'eau 31. L'eau est pompée dans ce conduit d'acheminement de l'eau 31 par une pompe 32. Cette pompe est une pompe à haute pression dans le sens où elle impose une pression supérieure à la pression imposée dans le circuit d'alimentation en eau par une autre pompe de relevage décrite plus loin.

De manière remarquable, le générateur électrique 35 appartient à un convertisseur électromécanique 50 adapté à convertir en énergie électrique l'énergie d'un flux de vapeur d'eau circulant dans le circuit d'alimentation en eau 300.

Pour cela, l'eau pompée hors du réservoir d'eau 30 et circulant dans le conduit d'acheminement de l'eau 31 traverse un dispositif de récupération de l'énergie des gaz d'échappement 33. Ce dispositif de récupération de l'énergie des gaz d'échappement 33 est un échangeur de chaleur du type air-eau grâce auquel l'eau circulant dans le conduit d'acheminement de l'eau 31 est chauffée par les gaz d'échappement du moteur circulant dans le conduit d'échappement 10 du moteur à combustion interne dans lequel le dispositif 500 est installé.

Dans ce dispositif de récupération de l'énergie des gaz d'échappement 33, l'eau est chauffée à une température supérieure ou égale à la température correspondant à son point d'ébullition.

L'eau circulant dans le conduit d'acheminement de l'eau 31 passe ainsi sous phase vapeur dans ce dispositif de récupération de l'énergie des gaz d'échappement 33.

En sortie du dispositif de récupération de l'énergie des gaz d'échappement 33, un dispositif de détente 34 de la vapeur d'eau est disposé sur le trajet du conduit d'acheminement de l'eau 31. La vapeur d'eau est ainsi acheminée par le conduit d'acheminement de l'eau 31 vers le dispositif de détente 34.

Ce dispositif de détente 34 est couplé au générateur électrique 35 de telle sorte que la détente de la vapeur d'eau dans le dispositif de détente 34 entraîne la génération d'une tension électrique aux bornes du générateur électrique 35.

Le dispositif de détente est par exemple un dispositif de détente à piston ou une turbine à vapeur.

Le dispositif de détente 34 associé au générateur électrique 35 forme ainsi un convertisseur électromécanique 50 adapté à convertir en énergie électrique l'énergie de la vapeur d'eau circulant dans le conduit d'alimentation en eau 31.

Une tension électrique est ainsi imposée entre les bornes du générateur électrique. Les bornes du générateur électrique sont connectées directement ou indirectement aux électrodes 43, 44 du dispositif d'électrolyse 40.

Lorsque les électrodes sont reliées directement aux bornes du générateur électrique, celui-ci impose directement une tension entre les électrodes.

Dans l'exemple représenté sur la figure unique, les bornes du générateur sont connectées à une batterie 36 comportant des accumulateurs adaptés à stocker l'énergie électrique. Les électrodes 43, 44 du dispositif électrolyseur sont alors connectées à cette batterie 36, qui impose une tension entre ces électrodes 43,44.

En sortie du dispositif de détente 34, la vapeur d'eau est acheminée jusqu'au dispositif d'électrolyse 40.

Lorsque la vapeur d'eau traverse le dispositif d'électrolyse 40, une partie de celle-ci est électrolysée au contact des électrodes 43, 44.

Cette réaction d'électrolyse produit un mélange de dihydrogène et de dioxygène qui est recueilli au moins partiellement par un conduit d'acheminement du gaz 42 enrichi en dihydrogène et dioxygène reliant une sortie des gaz produits par le dispositif d'électrolyse 40 et la ligne d'admission 100.

Selon un premier mode de réalisation de l'invention, représenté sur la figure 1, l'ensemble du gaz enrichi en dihydrogène et en dioxygène produit par le dispositif d'électrolyse 40 est recueilli par ledit conduit d'acheminement 42 pour être introduit dans la ligne d'admission 100.

De préférence, un réservoir 41 disposé sur le trajet dudit conduit d'acheminement du gaz 42 permet de stocker une partie du gaz enrichi en dihydrogène et dioxygène produit par le dispositif d'électrolyse 40.

En variante, ce réservoir peut être disposé sur le trajet d'un conduit de dérivation piqué en entrée et en sortie sur ledit conduit d'acheminement du gaz et muni de deux vannes disposées en entrée et en sortie pour réguler le débit de gaz entrant et sortant dudit réservoir.

Le conduit d'acheminement du gaz 42 débouche de préférence dans le répartiteur 7 des gaz d'admission. En variante, il peut déboucher à un autre endroit de la ligne d'admission 100 ou directement dans une ou plusieurs chambres de combustion 8.

Il est prévu de préférence un dispositif d'injection dudit gaz enrichi en dihydrogène et en dioxygène dans la ligne d'admission du moteur ou dans la chambre de combustion du moteur. Ce dispositif d'injection peut simplement comporter une vanne disposée en sortie du conduit d'acheminement du gaz 42.

Selon un deuxième mode de réalisation de l'invention représenté sur la figure 2, une partie ou la totalité du dioxygène produit par le dispositif d'électrolyse 40 est recueilli par un conduit de dérivation 45 piqué en entrée sur le dispositif d'électrolyse 40 et en sortie sur la ligne d'échappement 200, en amont des systèmes de traitement des gaz d'échappement 11, 12, en particulier, en amont du catalyseur 11.

Le dioxygène et le dihydrogène produit par le dispositif d'électrolyse 40 sont en effet produit chacun à proximité de l'une des électrodes 43, 44 du dispositif d'électrolyse 40.

Dans l'exemple représenté sur la figure 2, le dioxygène est par exemple produit à proximité de l'électrode 43. Il est ainsi possible de recueillir séparément les deux gaz, comme représenté schématiquement sur cette figure 2.

L'introduction de dioxygène en amont des systèmes de traitement des gaz d'échappement 11, 12 permet de réduire l'émission d'hydrocarbures imbrûlés, de fumée et de monoxyde de carbone.

De préférence, le conduit de dérivation 45 communique avec le conduit d'acheminement du gaz 42 par l'intermédiaire d'une vanne 46 disposée sur le trajet de ce conduit de dérivation 45. Le pilotage de la vanne 46 par l'unité de commande électronique autorise un ajustement de la quantité de dioxygène circulant dans le conduit de dérivation 45. Le dioxygène ne circulant pas dans ce conduit de dérivation 45 circule dans le conduit d'acheminement du gaz 42.

La quantité relative de dioxygène et de dihydrogène contenue dans le gaz enrichi en dioxygène et en dihydrogène circulant dans le conduit d'acheminement des gaz 42 et stocké dans le réservoir 41 peut ainsi être ajustée. Cela permet notamment de limiter les risques d'explosion de ce mélange de dioxygène et de dihydrogène.

L'ajustement de la quantité de dioxygène circulant dans ce conduit de dérivation 45 est réalisé de manière à réaliser un compromis optimal entre les performances du moteur, la réduction des émissions polluantes et la prévention de ces risques d'explosion.

Quel que soit le mode de réalisation de l'invention, la vapeur d'eau non électrolysée dans le dispositif d'électrolyse 40 est évacuée par un conduit de récupération de l'eau 39.

Un condenseur 37 est disposé sur le trajet de ce conduit de récupération de l'eau 39, en aval du dispositif d'électrolyse 40. Le conduit de récupération de l'eau 39 débouche en aval dans le réservoir d'eau 30.

De préférence, la pompe de relevage 38 est disposée sur le trajet dudit conduit de récupération de l'eau 39, entre le condenseur 37 et le réservoir d'eau 30 et pompe l'eau condensée dans le condenseur 37 vers le réservoir d'eau 30.

Cette pompe de relevage 38 est du type pompe basse pression. Elle impose une pression inférieure à la pression imposée par la pompe haute pression 32 disposée en aval du réservoir d'eau 30.

On a décrit ici un dispositif 500 conforme à l'invention dans lequel le dispositif d'électrolyse réalise une électrolyse de l'eau en phase vapeur.

Cependant, on peut également envisager l'utilisation d'un dispositif d'électrolyse de l'eau en phase liquide.

Dans ce cas, un dispositif de refroidissement de l'eau est disposé sur le trajet du conduit d'alimentation en eau, entre le dispositif de détente et le dispositif d'électrolyse. Ce dispositif de refroidissement refroidi l'eau en dessous de son point d'ébullition de sorte qu'il fait passer la vapeur d'eau le traversant sous forme liquide.

Ledit dispositif d'électrolyse étant disposé en aval de ce refroidisseur, il est alors alimenté en eau liquide par le circuit d'alimentation d'eau.

Aucun condenseur n'est alors prévu en sortie du dispositif d'électrolyse sur le trajet du conduit de récupération de l'eau.

Quel que soit le mode de réalisation du dispositif selon l'invention utilisée, un échangeur de chaleur entre l'eau circulant dans le conduit d'acheminement de l'eau 31 et les gaz circulant dans le conduit d'admission 1 peut être avantageusement disposé sur le trajet du circuit d'alimentation en eau, entre le réservoir d'eau 30 et le dispositif de récupération d'énergie 33, afin de préchauffer l'eau avant son passage dans le dispositif de récupération d'énergie.

Ce préchauffage facilite le passage de l'eau sous phase vapeur dans ce dispositif de récupération d'énergie.

La compression des gaz circulant dans le conduit d'admission 1 par le compresseur 3 ayant pour effet de réchauffer ceux-ci, il est habituellement prévu sur le trajet du conduit d'admission 1, en aval du compresseur 3, un échangeur de chaleur 6 qui refroidit les gaz en sortie du turbocompresseur 5.

Cet échangeur de chaleur est ici un échangeur air-eau qui permet de remplir la double fonction de préchauffage de l'eau circulant dans le conduit d'alimentation en eau 31 et le refroidissement des gaz circulant dans le conduit d'admission.

## Revendications

1. Dispositif (500) d'alimentation en gaz d'une machine thermique à combustion comportant un dispositif d'électrolyse (40) de l'eau alimenté en eau par un circuit d'alimentation en eau (300) et produisant en sortie un gaz enrichi en dihydrogène et en dioxygène destiné à être introduit dans ladite machine, ledit dispositif d'électrolyse (40) comportant au moins deux électrodes (43, 44) connectées à un générateur électrique (35) qui appartient à un convertisseur électromécanique (50) **caractérisé en ce qu'**il est adapté à convertir en énergie électrique l'énergie d'un flux de vapeur d'eau circulant dans le circuit d'alimentation en eau (300).

2. Dispositif (500) selon la revendication 1, dans lequel ledit circuit d'alimentation en eau (300) comporte un réservoir d'eau (30) liquide relié en aval à un conduit d'acheminement de l'eau (31) sur le trajet duquel est placé un dispositif de récupération (33) de l'énergie des gaz d'échappement adapté à faire passer l'eau liquide le traversant sous forme vapeur sous l'action de la chaleur des gaz d'échappement de ladite machine.

3. Dispositif (500) selon la revendication 2, dans lequel ledit convertisseur électromécanique (50) est disposé en aval du dispositif de récupération (33) d'énergie sur le trajet du circuit d'alimentation en eau (300) et comporte un dispositif de détente (34) de la vapeur d'eau circulant dans ce circuit d'alimentation en eau (300) qui est couplé au générateur électrique (35) de telle sorte que la détente de la vapeur d'eau dans le dispositif de détente (34) entraîne la génération d'une tension électrique aux bornes du générateur électrique (35).

4. Dispositif (500) selon la revendication 3, dans lequel ledit dispositif d'électrolyse (40) est disposé en aval du dispositif de détente (34) sur le trajet du circuit d'alimentation en eau (300), de manière à être alimenté en vapeur d'eau par ce circuit d'alimentation en eau (300), et débouche en aval sur un conduit de récupération de l'eau (39) du circuit d'alimentation en eau (300).

5. Dispositif (500) selon la revendication 4, dans lequel un condenseur (37) est disposé sur le trajet dudit conduit de récupération de l'eau (39), en aval du dispositif d'électrolyse (40), ledit conduit de récupération de l'eau (39) débouchant en aval dans le réservoir d'eau (30).

6. Dispositif (500) selon la revendication 5, dans lequel une pompe de relevage (38) est disposée sur le trajet dudit conduit de récupération de l'eau (39), entre le condenseur (37) et le réservoir d'eau (30).

7. Dispositif selon la revendication 3, dans lequel un dispositif de refroidissement disposé sur le trajet du circuit d'alimentation en eau, en aval du dispositif de détente, est adapté à faire passer la vapeur d'eau le traversant sous forme liquide, ledit dispositif d'électrolyse étant disposé en aval de ce dispositif de refroidissement de manière à être alimenté en eau liquide par le circuit d'alimentation d'eau et débouchant en aval sur un conduit de récupération de l'eau.

8. Dispositif selon la revendication 7, dans lequel une pompe est disposée sur le trajet dudit conduit de récupération de l'eau, entre le dispositif d'électrolyse et le réservoir d'eau.

9. Dispositif (500) selon l'une des revendications 2 à 8, dans lequel un échangeur de chaleur (6) est disposé sur le trajet du circuit d'alimentation en eau (300), entre le réservoir d'eau (30) et le dispositif de récupération d'énergie (33).

10. Dispositif (500) selon l'une des revendications précédentes, dans lequel lesdites électrodes (43, 44) du dispositif d'électrolyse (40) sont connectées à une batterie (36) connectée aux bornes du générateur électrique (35).

11. Dispositif (500) selon l'une des revendications précédentes, dans lequel il est prévu un dispositif d'injection d'au moins une partie du gaz enrichi en dihydrogène et en dioxygène dans une ligne d'admission (100) des gaz en entrée de ladite machine ou dans une chambre de combustion (8) de cette machine.

12. Dispositif (500) selon l'une des revendications précédentes, dans lequel il est prévu un conduit de dérivation (45) du dioxygène produit par le dispositif d'électrolyse (40) adapté à recueillir au moins une partie du dioxygène produit par ce dispositif d'électrolyse (40) et à l'introduire dans une ligne d'échappement (200) de la machine.

13. Machine thermique à combustion comportant au moins une chambre de combustion (8) alimentée en gaz d'admission par une ligne d'admission (100) et débouchant en aval dans une ligne d'échappement (200) dans laquelle circulent les gaz d'échappement, comportant un dispositif d'alimentation (500) en gaz selon l'une des revendications précédentes, adapté à injecter dans ladite ligne d'admission (100) ou dans ladite chambre de combustion (8) au moins une partie du gaz enrichi en dihydrogène et en dioxygène produit par ce dispositif (500).

14. Machine thermique à combustion selon la revendication précédente dans lequel un échangeur de chaleur (6) est disposé sur le trajet du circuit d'alimentation en eau (300), entre un réservoir d'eau (30) et un dispositif de récupération d'énergie (33), ledit échangeur de chaleur (6) étant un échangeur air-eau adapté à favoriser les échanges de chaleur entre le gaz circulant dans la ligne d'admission (100) de la machine et l'eau circulant dans le circuit d'alimentation en eau (300) du dispositif d'alimentation (500) en gaz.

15. Procédé pour alimenter une machine thermique à combustion en gaz, comportant les étapes suivantes :
- faire circuler de l'eau liquide dans un circuit d'alimentation en eau (300) d'un dispositif d'électrolyse (40) de l'eau,
- en amont du dispositif d'électrolyse (40), faire passer l'eau circulant dans le circuit d'alimentation en eau (300) en phase vapeur,
- faire circuler l'eau en phase vapeur dans un convertisseur électromécanique (50) adapté à convertir en énergie électrique l'énergie du flux de vapeur d'eau,
- utiliser l'énergie électrique générée par le convertisseur électromécanique (50) pour imposer une tension entre au moins deux électrodes (43, 44) du dispositif d'électrolyse (40) de l'eau,
- injecter dans une ligne d'admission (100) ou dans une chambre de combustion (8) de la machine au moins une partie du gaz enrichi en dihydrogène et dioxygène produit par l'électrolyse de l'eau.

16. Moteur à combustion interne comportant une machine thermique à combustion selon l'une des revendications 13 à 15.

## Patentansprüche

1. Gaszuführvorrichtung (500) einer Verbrennungsmaschine mit einer Wasserelektrolysevorrichtung (40), die über eine Wasserversorgungsleitung (300) mit Wasser versorgt wird und am Ausgang ein mit Wasserstoff und Sauerstoff angereichertes Gas produziert, das in die Verbrennungsmaschine eingeführt wird, wobei die Elektrolysevorrichtung (40) mindestens zwei Elektroden (43, 44) umfasst, die an einen Stromgenerator (35) angeschlossen sind, der zu einem elektromechanischen Wandler (50) gehört, **dadurch gekennzeichnet, dass** er die Energie eines in der Wasserversorgungsleitung (300) fließenden Wasserdampfflusses in elektrische Energie umwandeln kann.

2. Vorrichtung (500) nach Anspruch 1, bei der die Wasserversorgungsleitung (300) einen Flüssigwasserbehälter (30) umfasst, der nachfolgend mit einer Wasserförderleitung (31) verbunden ist, an deren Verlauf eine Rückgewinnungsvorrichtung (33) der Energie aus den Abgasen angeordnet ist, durch die flüssiges Wasser, durch die Wirkung der Hitze der Abgase dieser Maschine, in gasförmige Form gebracht werden kann.

3. Vorrichtung (500) nach Anspruch 2, bei der der elektromechanische Wandler (50) nach der Energierückgewinnungsvorrichtung (33) am Verlauf der Wasserversorgungsleitung (300) angeordnet ist und eine Druckentlastungsvorrichtung (34) für den Wasserdampf umfasst, der in dieser Wasserversorgungsleitung (300) fließt, wobei diese mit dem Stromgenerator (35) derart gekoppelt ist, dass die Druckentlastung des Wasserdampfes in der Druckentlastungsvorrichtung (34) zur Erzeugung einer elektrischen Spannung an den Klemmen des Stromgenerators (35) führt.

4. Vorrichtung (500) nach Anspruch 3, bei der die Elektrolysevorrichtung (40) derartig nach der Druckentlastungsvorrichtung (34) am Verlauf der Wasserversorgungsleitung (300) angeordnet ist, dass sie durch die Wasserversorgungsleitung (300) mit Wasserdampf versorgt wird und nachfolgend in eine Wasserrückgewinnungsleitung (39) der Wasserversorgungsleitung (300) mündet.

5. Vorrichtung (500) nach Anspruch 4, bei der am Verlauf der Wasserrückgewinnungsleitung (39) der Elektrolysevorrichtung (40) nachgestellt ein Kondensator (37) angeordnet ist, wobei die Wasserrückgewinnungsleitung (39) nachfolgend in den Wasserbehälter (30) mündet.

6. Vorrichtung (500) nach Anspruch 5, bei der am Verlauf der Wasserrückgewinnungsleitung (39) zwischen dem Kondensator (37) und dem Wasserbehälter (30) eine Rücklaufpumpe (38) angeordnet ist.

7. Vorrichtung nach Anspruch 3, bei der sich eine an dem Verlauf der Wasserversorgungsleitung und nach der Druckentlastungsvorrichtung angeordnete Kühlvorrichtung dazu eignet, den Wasserdampf in flüssiger Form durch die Elektrolysevorrichtung zu führen, die derart nach dieser Kühlvorrichtung angeordnet ist, dass sie durch die Wasserversorgungsleitung mit Flüssigwasser versorgt wird und nachfolgend in eine Wasserrückgewinnungsleitung mündet.

8. Vorrichtung nach Anspruch 7, bei der zwischen der Elektrolysevorrichtung und dem Wasserbehälter an dem Verlauf der Wasserrückgewinnungsleitung eine Pumpe angeordnet ist.

9. Vorrichtung (500) nach einem der Ansprüche 2 bis 8, bei der an dem Verlauf der Wasserversorgungsleitung (300) zwischen dem Wasserbehälter (30) und der Energierückgewinnungsvorrichtung (33) ein Wärmetauscher (6) angeordnet ist.

10. Vorrichtung (500) nach einem der vorausgehenden Ansprüche, bei der die Elektroden (43, 44) der Elektrolysevorrichtung (40) an eine Batterie (36) angeschlossen sind, die wiederum an den Klemmen des Stromgenerators (35) angeschlossen ist.

11. Vorrichtung (500) nach einem der vorausgehenden Ansprüche, bei der eine Einspritzvorrichtung für mindestens einen Teil des mit Wasserstoff und Sauerstoff angereicherten Gases in eine Ansaugleitung (100) der Gase am Eingang dieser Maschine oder in eine Verbrennungskammer (8) dieser Maschine vorgesehen ist.

12. Vorrichtung (500) nach einem der vorausgehenden Ansprüche, bei der eine Abzweigleitung (45) für den von der Elektrolysevorrichtung (40) produzierten Sauerstoff vorgesehen ist, die mindestens einen Teil des von dieser Elektrolysevorrichtung (40) produzierten Sauerstoffs aufnehmen und ihn einer Abgasleitung (200) der Maschine zuführen kann.

13. Verbrennungsmaschine mit mindestens einer Verbrennungskammer (8), die durch eine Ansaugleitung (100) mit Ansauggas versorgt wird und nachfolgend in eine Abgasleitung (200) mündet, in der die Abgase fließen, wobei sie eine Gaszuführvorrichtung (500) nach einem der vorausgehenden Ansprüche umfasst, die mindestens einen Teil des mit Wasserstoff und Sauerstoff angereicherten Gases, das von dieser Vorrichtung (500) erzeugt wird, in die Ansaugleitung (100) oder in die Verbrennungskammer (8) einspritzen kann.

14. Verbrennungsmaschine nach vorausgehendem Anspruch, bei der an dem Verlauf der Wasserversorgungsleitung (300) zwischen einem Wasserbehälter (30) und einer Energierückgewinnungsvorrichtung (33) ein Wärmetauscher (6) angeordnet ist, bei dem es sich um einen Luft-Wasser-Wärmetauscher handelt, der den Wärmeaustausch zwischen dem in der Ansaugleitung (100) der Maschine fließenden Gas und dem in der Wasserversorgungsleitung (300) der Gaszuführvorrichtung (500) fließenden Wasser fördern kann.

15. Verfahren für die Speisung mit Gas einer Verbrennungsmaschine, das folgende Schritte umfasst:
- Flüssiges Wasser in einer Wasserversorgungleitung (300) einer Wasserelektrolysevorrichtung (40) fließen lassen,
- das in der Wasserversorgungsleitung (300) fließende Wasser vor der Elektrolysevorrichtung (40) in einen gasförmigen Zustand übergehen lassen,
- gasförmiges Wasser in einen elektromechanischen Wandler (50) fließen lassen, der die Energie des Wasserdampfflusses in elektrische Energie umwandeln kann,
- diese vom elektromechanischen Wandler (50) erzeugte elektrische Energie nutzen, um zwischen mindestens zwei Elektroden (43,44) der Wasserelektrolysevorrichtung (40) eine Spannung auszuüben,
- in eine Ansaugleitung (100) oder in eine Verbrennungskammer (8) der Maschine mindestens einen Teil des mit Wasserstoff und Sauerstoff angereicherten Gases, das durch die Wasserelektrolyse erzeugt wurde, einspritzen.

16. Interner Verbrennungsmotor mit einer Verbrennungsmaschine nach einem der Ansprüche 13 bis 15.

## Claims

1. A gas-feed device (500) for feeding gas to a thermal combustion machine, the device comprising an electrolyser device (40) for electrolysing water that is fed with water by a water feed circuit (300) and that produces as output a gas that is enriched in dihydrogen and in dioxygen for introducing into said machine, said electrolyser device (40) having at least two electrodes (43, 44) connected to an electricity generator (35) forming part of an electromechanical converter (50), the gas-feed device being **characterized in that** it is adapted to convert the energy of a stream of steam flowing in the water feed circuit (300) into electrical energy.

2. A device (500) according to claim 1, wherein said water feed circuit (300) comprises a liquid water tank (30) connected downstream to a water delivery duct (31) having placed on its path an energy recovery device (33) for recovering energy from exhaust gas and adapted to cause the liquid water flowing through it to pass into the form of steam under the action of the heat of the exhaust gas from said machine.

3. A device (500) according to claim 2, wherein said electromechanical converter (50) is arranged downstream from the energy recovery device (33) on the path of the water feed circuit (300) and includes an expander device (34) for expanding the steam flowing in the water feed circuit (300) that is coupled to the electricity generator (35) in such a manner that the expansion of the steam in the expander device (34) causes a voltage to be generated across the terminals of the electricity generator (35).

4. A device (500) according to claim 3, wherein said electrolyser device (40) is arranged downstream from the expander device (34) on the path of the water feed circuit (300) in such a manner as to be fed with steam by the water feed circuit (300), and leads downstream to a water recovery duct (39) for recovering the water of the water feed circuit (300).

5. A device (500) according to claim 4, wherein a condenser (37) is arranged on the path of said water recovery duct (39) downstream from the electrolyser device (40), said water recovery duct (39) leading downstream to the water tank (30).

6. A device (500) according to claim 5, wherein a lift pump (38) is arranged on the path of said water recovery duct (39) between the condenser (37) and the water tank (30).

7. A device according to claim 3, wherein a cooler device arranged on the path of the water feed circuit downstream from the expander device is adapted to cause the steam flowing through it to pass into liquid form, said electrolyser device being arranged downstream from the cooler device so as to be fed with liquid water by the water feed circuit and leading downstream to a water recovery duct.

8. A device according to claim 7, wherein a pump is arranged on the path of said water recovery duct between the electrolyser device and the water tank.

9. A device (500) according to any one of claims 2 to 8, wherein a heat exchanger (6) is arranged on the path of the water feed circuit (300) between the water tank (30) and the energy recovery device (33).

10. A device (500) according to any preceding claim, wherein said electrodes (43, 44) of the electrolyser device (40) are connected to a battery (36) connected to the terminals of the electricity generator (35).

11. A device (500) according to any preceding claim, wherein an injector device is provided for injecting at least a portion of the dihydrogen- and dioxygen-enriched gas into a gas admission line (100) at the inlet to said machine or into a combustion chamber (8) of the machine.

12. A device (500) according to any preceding claim, wherein a branch duct (45) is provided for the dioxygen produced by the electrolyser device (40) and suitable for recovering at least a portion of the dioxygen produced by the electrolyser device (40) and for introducing it into an exhaust line (200) of the machine.

13. A thermal combustion machine including at least one combustion chamber (8) fed with admission gas by an admission line (100) and leading downstream into an exhaust line (200) in which exhaust gas flows, the machine including a gas feed device (500) according to any preceding claim, and adapted to inject at least a portion of the dihydrogen- and dioxygen-enriched gas produced by the device (500) into a said admission line (100) or into said combustion chamber (8).

14. A thermal combustion machine according to the preceding claim, wherein a heat exchanger (6) is arranged on the path of the water feed circuit (300) between a water tank (30) and an energy recovery device (33), said heat exchanger (6) being an air-water heat exchanger adapted to enhance the exchange of heat between the gas flowing in the admission line (100) of the machine and of the water flowing in the water feed circuit (300) of the gas feed device (500).

15. A method of feeding gas to a thermal combustion machine, the method comprising the following steps:
• causing liquid water to flow in a water feed circuit (300) of a water electrolyser device (40);
• upstream from the electrolyser device (40), causing the water flowing in the water feed circuit (300) to pass into the steam phase;
• causing the water in the steam phase to flow in an electromechanical converter (50) suitable for converting the energy of the stream of steam into electrical energy;
• using the electrical energy generated by the electromechanical converter (50) to impose a voltage between at least two electrodes (43, 44) of the water electrolyser device (40); and
• injecting at least a portion of the dihydrogen- and dioxygen-enriched gas produced by electrolysing water into an admission line (100) or into a combustion chamber (8) of the machine.

16. An internal combustion engine including a thermal combustion machine according to any one of claims 13 to 15.
